(19) Europäisches Patentamt
European Patent Office
Office européen des brevets

(11) **EP 4 175 218 A1**

(12) **EUROPEAN PATENT APPLICATION**

(43) Date of publication:
**03.05.2023 Bulletin 2023/18**

(21) Application number: **21306533.7**

(22) Date of filing: **29.10.2021**

(51) International Patent Classification (IPC):
*H04L 9/32* (2006.01)     *H04L 9/08* (2006.01)

(52) Cooperative Patent Classification (CPC):
**H04L 9/0844; H04L 9/0877; H04L 9/321;
H04L 9/3247**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Thales Dis France SAS
92190 Meudon (FR)**
• **THALES
92400 Courbevoie (FR)**

(72) Inventors:
• **MARSEILLE, François-Xavier
92190 Meudon (FR)**
• **LETOURNEUR, Fadela
92190 Meudon (FR)**
• **RUGET, Frédéric
92190 Meudon (FR)**

(74) Representative: **Quintero Romero, Manuel
Thales Dis France SAS
Intellectual Property Department
6, rue de la Verrerie
92190 Meudon (FR)**

(54) **METHOD TO ESTABLISH A SECURE CHANNEL**

(57)     The present invention provides a method to establish a secure channel between the owner of a software payload and the software payload itself when running into a hardware-based trusted execution environment, HW TEE, at the instance of a cloud service provider, the method comprising the following steps:
• sending, by the owner, at least a nonce to the software payload;
• generating, by the software payload, a payload key pair: public key and private key;
• mixing, by the software payload, the payload public key with the nonce;
• computing, by the HW TEE, an attestation using at least this nonce mixed with the payload public key;
• sending, by the software payload, at least the attestation, and the payload public key to the owner;
• verifying, by the owner, the attestation using the sent nonce mixed with the received payload public key;
• generating, by the software payload and the owner, a session key between them; and
• establishing a secure channel between the owner and the software payload running into the HW TEE.

FIG. 2

**Description**

## TECHNICAL FIELD

The present invention relates to the technical field of data protection and, namely, to the field of confidential computing thus protecting data in use.

More particularly, the present invention allows establishing a general purpose (and authenticated) secure channel between the owner of a software payload and the software payload itself when running into a hardware-based trusted execution environment at the instance of a cloud service provider, CSP.

Advantageously, this secure channel does not rely on *ad hoc* HW TEE mechanisms of a specific CSP but provides a multi-CSP and interoperable solution.

## BACKGROUND OF THE INVENTION

In today's computing, data may exist in three different states: in transit (i.e., data traversing untrusted public or private networks), at rest (i.e., inactive data in storage), and in use (i.e., data being processed while in memory and during computation). Since cryptographic techniques to protect data in transit and at rest have been constantly enhanced and widely deployed thus thwarting threat vectors against network and storage devices, attackers have recently shifted to targeting data-in-use.

As more data is moved to the cloud, mobile, or IoT devices - where processing takes place in remote and difficult to secure locations - the protection of data and applications during execution is increasingly important.

Confidential computing thus provides a solution for protecting data in use by using hardware-based Trusted Execution Environments (henceforth HW TEE). A Trusted Execution Environment (TEE) is a secure area of a processor that assures data integrity, data confidentiality, and code integrity. The hardware-based TEE uses hardware-backed techniques to provide increased security guarantees for the execution of code and protection of data within that environment.

HW TEE basically provides security though the lowest layer of hardware, down to the silicon components, with a minimum of dependencies, by removing the operating system, device driver and peripheral vendors from the list of required trusted parties, thereby reducing exposure to potential compromise. Examples of HW TEE chip providers are Intel with Software Guard Extensions (Intel SGX), or AMD with Secure Encrypted Virtualization (SEV-SNP).

Service providers or cloud service providers such as Amazon Web Services (AWS), Google Cloud Platform (GCP), Microsoft Azure (Azure), OVHClod, or AlibabaCloud normally comprise one or several HW TEE in their infrastructure in order to offer to their customers the means to use confidential computing for their payload(s). These customers (henceforth "owners") own piece(s) of computing resources e.g., code or data (henceforth "payload") that wishes to execute in the CSP infrastructure.

Nevertheless, confidential computing services are not coming as a simple turnkey solution, especially for going beyond basic security properties. One of these basic security properties is known as remote attestation or simply "attestation", that is, a mechanism to provide a verifiable signature of the running payload provided by the HW TEE and to be verified by either the owner or a 3rd party of trust. This type of evidence must be signed by hardware that can be vouched for by a manufacturer (e.g., Intel or AMD), so that the party checking the evidence has some assurance that it was not generated by malware or other unauthorized parties.

However, HW TEE from different vendors have their own attestation mechanisms (i.e., different technically implemented mechanisms), that are not interoperable among them and only share a minimum set of security features for the attestation verification. Indeed, all HW TEE default attestation mechanisms ensure that the HW TEE is genuine and the payload is the expected one (measurement signature indicating that it was not modified) further being able to inform about its current state in the execution.

Furthermore, in order to prevent replay attacks against the attestation, the attestation mechanism may involve a nonce sent from the user.

In addition to these basic security features, there is no built-in mean to guarantee that any subsequent communication from the owner will occur with the same attested payload (and not a modified one). For instance, if the owner wishes to provision some secret(s) to that payload, he/she will be uncertain if the very same payload is being provisioned with these secret(s) if the attestation was already performed.

Thus, there is a need in the confidential computing industry for an interoperable solution that allows the owner to provision secret(s) in the very same attested payload.

## SUMMARY OF THE INVENTION

The present invention provides a solution for the aforementioned problems by a method for establishing a secure channel between the owner of a software payload and the software payload itself when running into a HW TEE according to claim 1, a method to re-establish an authenticated secure channel according to claim 10, a related system according to claim 11, an owner according to claim 12, a software payload according to claim 13 and a HW TEE according to claim 14. In dependent claims, preferred embodiments of the invention are defined.

In a first inventive aspect, the invention provides a computer-implemented method to establish a secure channel between the owner of a software payload and the software payload itself when running into a hardware-based trusted execution environment, HWTEE, at the instance of a cloud service provider, the method comprising the following steps:

- sending, by the owner, at least a nonce to the software payload;
- generating, by the software payload, a payload key pair: public key and private key;
- mixing, by the software payload, the payload public key with the nonce;
- computing, by the HW TEE, an attestation using at least this nonce mixed with the payload public key;
- sending, by the software payload, at least the attestation, and the payload public key to the owner;
- verifying, by the owner, the attestation using the sent nonce mixed with the received payload public key;
- generating, by the software payload and the owner, a session key between them; and
- establishing a secure channel between the owner and the software payload running into the HW TEE.

As mentioned, the attestation process requires that the owner eventually sends a nonce to the payload (or to HW TEE) for verification purposes. As known, the HW TEE is the entity handling the nonce, but usually it passes through the payload. Throughout the following description, a nonce will be understood as a data string generated at the owner side (either by the owner's device or by another interconnected device) to be used only once in a cryptographic communication. The fact that the nonce is sent by the owner does no presuppose that the attestation flow is started by the owner. It may be equally started by the payload itself, when starting for example.

That is, in a particular embodiment, the workflow starts either because the payload sends a message on startup or because the CSP sends a notification that the payload is ready or because the owner checks periodically whether the payload is ready.

The nonce may be either a random or a pseudo-random number, or also contain blocks of different information such as a timestamp or identifiers (owner's, payload's, HWTEE's, etc.). Nevertheless, the skilled person shall recognize that the actual format, size and other informative data sent in the nonce is specific to the technology of the HW TEE vendor. For instance, some technologies require that the original nonce be first hashed to maintain a length.

Then, in a typical process, once the owner provides the payload with the nonce, it is passed to the HW TEE as part of the traditional attestation process on the HW TEE side. In other words, the nonce becomes part of the data signed by the HW TEE and, therefore, if the owner is able to verify the attestation it means that the same nonce was used.

The present invention proposed mixing with this nonce other data generated by the payload (in particular a generated payload public key), to be also signed by the HW TEE. In a preferred embodiment, the payload generates an ECDSA key pair (payload private key, payload public key).

Consequently, if the owner also knows this payload public key, it will be able to perform the same mixing operation and by verifying the attestation, it will be sure that these data were indeed signed by the HW TEE.

In this way, the method according to the invention binds a key pair generated by the payload to the HW TEE. Therefore, if the owner is able to verify the attestation then it is certain that this key pair was generated by (or inside) the payload running under confidential computing.

From this point, both the software payload and the owner can generate a session key (shared secret) to establish a secure channel between them from the point of view of the owner. Then, this shared session key can be used as the key for a symmetric algorithm like Advanced Encryption Standard (AES) or Triple Data Encryption Algorithm (3DES) thereby establishing the secure channel.

Advantageously, the present invention allows leveraging the capabilities in common of HW TEEs from different vendors to guarantee the authenticity of these public elements while providing a multi-CSP method to establish a secure channel between owner and payload.

Once the secure channel is established, the owner is certain that can inject or provision some secret(s) in the very same attested payload without being exposed.

As the skilled person knows, the session key (shared secret) between the parties (owner and payload) may be generated based on different key-agreement protocols such as any public key-based key-agreement protocol.

For instance, in a particular embodiment, the method further comprises the following steps for generating the session key by the software payload and the owner using a non-authenticated key-agreement protocol:

- generating and sending, by the owner, owner public data to the software payload;
- generating, by the software payload, payload public data and signing this payload public data using the generated payload private key;

- sending, by the software payload, the payload public data and the signed payload public data to the owner;
- verifying, by the owner, the signed payload public data using the received payload public key; and
- computing, by the software payload and the owner, a shared secret using owner public data and payload public data, respectively.

Since it uses a non-authenticated key-agreement protocol, it further requires that the public element(s) coming from the payload be signed using the just generated payload private key. In this way, the owner can ensure the origin of these public elements preventing any Man-In-The-Middle (MIM) attacks.

Nonetheless, the payload may also use the payload private key to sign any other data exchanged with the Owner apart from the ECDH public elements. For instance, payload private key may be used to sign other data during the establishment of the secure channel itself, later on for subsequent exchanges, etc.

In a preferred embodiment, the non-authenticated key-agreement protocol is based on an Elliptic Curve Diffie-Hellman, ECDH, protocol.

In a particular embodiment, the shared secret is passed through a key derivation function, KDF, to generate the session key.

In a particular embodiment, for mixing the payload public key with the nonce, the software payload firstly computes a hash of the payload public key and then scrambles the hash output with the nonce.

Since some data has to be public, the payload will generate the ECDSA Key Pair (payload public key, payload private key) and compute hash(payload public key) that will become this public data.

Then, this hash(payload public key) is mixed, for instance using an XOR function, with the nonce coming from the owner attestation request. Finally, XOR(hash(payload public key), nonce) is passed through the HW TEE during the attestation computation.

In addition, through the lifetime of the payload, it may be necessary for the owner to set subsequent communications with it, for instance to perform secret(s) rotation. However, maintaining the secure channel through the whole lifetime of the payload would be too costly in term of network resources.

According to the prior art, the option would be to re-do the attestation procedure to re-establish a secure channel between the payload and the owner but, as mentioned, in that case the owner cannot be sure whether the same attested payload is being provisioned. This is due to a core limitation of the existing HW TEE technology that does not provide confidentiality for the payload before its execution, but only its integrity.

Consequently, there is no guarantee for the owner that it would re-establish a secure channel with the very same payload, and there is no guarantee for the payload that it will be re-contacted by the same owner. As the skilled person would appreciate, depending on the use case, a lack of strong pairing between the payload and the owner may prevent confidential computing from being an option in some use cases.

Therefore, aiming at solving these drawbacks, in a particular embodiment, once the secure channel has been established between the owner and the software payload running into the HW TEE, the owner sends an owner authentication means to the payload, this owner authentication means being configured to allow subsequent authentication of the owner to the payload to re-establish a secure channel.

In other words, in this embodiment, the method ensures that once the payload has been provisioned by the owner with the secret(s), it is not possible for any other parties to break this "mating". Accordingly, this method prevents a rogue owner from masquerading the genuine one once, for instance, the payload has been provisioned with sensitive data.

In a preferred embodiment, the owner sends the owner authentication means just after establishing the secure channel with the payload. That is, not after re-establishing the channel to avoid a rogue owner-situation. In this way, it is ensured that subsequent communications will still occur between the exact same instance of the payload and the same owner and, more importantly, that subsequent re-establishments of the secure channel will happen between the parties that established the original secure channel.

To do so, for instance, these owner authentication means will be stored in the memory of the payload under the protection of the HW TEE, ensuring that it cannot be compromised in both confidentiality and integrity. That is, in a particular embodiment, after receiving the authentication means, the software payload stores it in a memory of the HW TEE architecture.

A secure channel may be closed and re-opened on demand, without need to repeat the entire attestation flow again.

In a particular embodiment, said owner authentication means is a X.509 certificate, a X.509 certificate chain, an owner public key of a generated owner Elliptic Curve Digital Signature Algorithm, ECDSA, or Digital Signature Algorithm, DSA, key pair, and/or a symmetric key such as Advanced Encryption Standard, AES, key.

In a preferred embodiment, the owner generates an owner key pair: public key and private key using, for example, ECDSA, and then sends the owner public key to the software payload for subsequent authentication purposes.

Similarly, the payload private key may be kept in the same (or different) memory, e.g., RAM, under the protection of the HW TEE. That is, in a particular embodiment, after generating the payload private key, the software payload stores it in a memory under the protection of the HW TEE.

By doing so, it will be possible to have a true mutual authentication for the subsequent communication between the payload and the original owner, by using both the public/ private keys on payload side, generated at the time of the initial attestation and the public / private keys on the owner side.

For HW TEEs having natively data sealing (term used by Intel) capabilities to store securely data in persistent storage, the payload private key and the owner authentication means can be stored therein. To do so, for instance, the HW TEE may access persistent storage (e.g., a hard disk drive HDD or solid-state drive SSD) and generates its own encryption keys so that the payload can encrypt the sensitive data it wants to store therein.

The HW TEE may also provide read-write memory for the payload such as the RAM that is typically encrypted by the HW TEE as part of the normal encryption of the payload. Unfortunately, since the payload keeps any sensitive data as part of its own RAM memory, there is an issue when the payload is stopped.

Consequently, the present invention advantageously defines a mean to provide sealing capabilities to the payload to ensure the confidentiality of its persistent storage. This means that if this payload is modified or the HW TEE is modified or tampered-with, the present invention still ensures that the payload will not be able to retrieve its persistent storage protected by the sealing capability.

To that end, in a particular embodiment, the method allows to persistently store data by the payload once the secure channel has been established, wherein the method comprises the following steps:

- generating, by the owner, a payload identifier using information shared from the payload during the establishment of the secure channel;
- generating, by the owner, a key initiator and persistently storing at the owner side the key initiator associated to the payload identifier;
- sending, by the owner, the payload identifier and the key initiator to the payload;
- using the key initiator, by the payload, to encrypt data; and
- persistently storing, by the payload, the encrypted data and the payload identifier.

Accordingly, this initiator key is not stored by the payload and will be deleted after used.

In a particular embodiment, the owner encrypts this payload identifier using a first encryption key, e.g., a symmetric key, before sending it to the payload for its persistent storing in encrypted form.

In a particular embodiment, the key initiator is a symmetric key.

In a preferred embodiment, the key initiator is first passed through a key derivation function, KDF, by the payload, to generate a symmetric key that encrypts the data.

In a preferred embodiment, the key initiator is passed through a key derivation function, KDF, by the payload, to generate a Message Authentication Code (MAC) that allows the payload to subsequently check the integrity of the persistently stored data.

In a second inventive aspect, the invention provides a computer-implemented method to re-establish an authenticated secure channel between the owner of a software payload and the software payload itself when running into a hardware-based trusted executed environment, HW TEE, at the instance of a cloud service provider, the method comprising the following steps:

- establishing a secure channel according to the method of any of the embodiments of the first inventive aspect;
- generating, by the owner, new owner public data
- signing, by the owner, this new owner public data and sending it to the software payload;
- retrieving, by the software payload, owner authentication means configured to allow subsequent authentication of the owner to the payload to re-establish a secure channel;
- verifying, by the software payload, the signed new owner public data by using the owner authentication means;
- generating, by the software payload, new payload public data and signing this payload public data using the payload private key;
- sending, by the software payload, the new payload public data and the signed new payload public data to the owner;
- verifying, by the owner, the signed new payload public data using the payload public key;
- computing, by the software payload and the owner, a new shared secret using new owner public data and new payload public data, respectively;
- generating, by the software payload and the owner, a session key between them; and
- re-establishing a secure channel between the owner and the software payload running into the HW TEE.

In a third inventive aspect, the invention provides system for establishing a secure channel between the owner of a software payload and the software payload itself when running into a hardware-based trusted execution environment, HW TEE, at the instance of a cloud service provider, the system comprising:

- the owner of the software payload configured to send the software payload to the HW TEE for its execution, the software payload configured to run into the HW TEE, and the HW TEE operated by a cloud service provider; wherein
- the owner is further configured to send at least a nonce to the software payload;
- a software payload is further configured to:

  ○ receive at least the nonce sent from the owner;
  ○ generate a payload key pair: public key and private key;
  ○ mix the payload public key with the nonce; and
  ○ send to the HW TEE said payload public key mixed with the nonce;

- the HW TEE is configured to compute an attestation using at least this received nonce mixed with the payload public key; and to send said attestation to the software payload;
- the software payload is further configured to send at least the attestation, and the payload public key to the owner;
- the owner is further configured to receive the attestation and the payload public key, mix the received payload public key with the sent nonce, and verify the received attestation using this mixed information; and
- the software payload and the owner being further configured to generate a session key between them thus establishing the secure channel between them.

In a fourth inventive aspect, the invention provides owner of a software payload for establishing a secure channel with the software payload itself when running into a HW TEE at the instance of a cloud service provider, the owner being configured to send the software payload to the HW TEE for its execution, wherein the owner is further configured to

- send at least a nonce to the software payload for mixing the nonce with a generated payload public key; and
- to receive, from the software payload, said payload public key and an attestation computed by the HW TEE using said mix of the nonce with the payload public key;
- mix the received payload public key with the sent nonce, and verify the received attestation from the software payload using this mixed information; and
- generate a session key thus establishing the secure channel with the software payload.

In a fifth inventive aspect, the invention provides software payload for establishing a secure channel with its owner when running into a HW TEE at the instance of a cloud service provider, the software payload being configured to run into the HW TEE operated by the cloud service provider;
wherein the software payload is further configured to:

- receive at least a nonce from the owner;
- generate a payload key pair: public key and private key;
- mix the payload public key with the nonce; and
- send to the HW TEE said;
- receive, from the HW TEE, a computed attestation using said mix of the nonce with the payload public key;
- send at least said attestation, and the payload public key to the owner; and
- generate a session key thus establishing the secure channel with the owner if the attestation if verified by the owner.

In a sixth inventive aspect, the invention provides Hardware-based trusted execution environment, HW TEE, at the instance of a cloud service provider for establishing a secure channel between an owner of a software payload and the software payload itself when running into a the HW TEE, wherein the HW TEE is operated by the cloud service provider;
wherein the HW TEE is configured to:

- received a payload public key generated by the payload mixed with a nonce originally sent by the owner;
- compute an attestation using at least this received nonce mixed with the payload public key; and
- send said attestation to the software payload for its further verification by the owner.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1    This figure shows an embodiment of a system according to the invention comprising an owner, and a payload running into a HW TEE.

Figure 2    This figure shows a schematic flowchart of an method to establish a secure channel between the owner of a software payload and the software payload itself when running into a HW TEE at the instance of a cloud service provider.

Figure 3    This figure shows a schematic diagram of an embodiment of the method to establish a secure channel between the owner and the software payload.

Figure 4    This figure shows a schematic diagram of an embodiment of the method for providing authentication means.

Figure 5    This figure shows a schematic diagram of an embodiment of the method to re-establish a secure and authenticated channel between the owner and the software payload.

Figure 6    This figure shows a schematic flowchart of a method to persistently store sensitive data by the payload.

Figure 7    This figure shows a schematic diagram of an embodiment of the method to persistently store sensitive data by the payload.

Figure 8    This figure shows a schematic diagram of an embodiment of the method to retrieve sensitive data persistently stored by the payload.

## DETAILED DESCRIPTION OF THE INVENTION

As it will be appreciated by one skilled in the art, aspects of the present invention may be embodied as a method or a system for establishing a secure channel, a method to re-establish the secure channel, an owner, a software payload or a HW TEE.

Herein below, it is considered a case in which the method according to the invention for establishing a secure channel is implemented by, locally at a server side, an HW TEE at instances or premises of a cloud service provider.

According to another embodiment, the owner is implemented by a PC 1, and may also be a SE host device that cooperates with a TEE that is adapted to carry out the functions that are carried out by the owner.

The invention does not impose any constraint as to a kind of the owner's device (so-called "owner") or cloud server provider's HW TEE. Examples of owner devices can be a mobile phone, a server, an IoT device, etc.

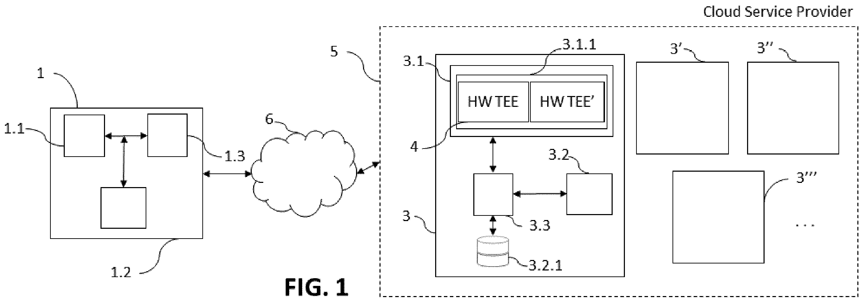

**Figure 1** depicts schematically a system of an owner, as a PC 1, and a software payload 2 running into a HW TEE 4 at the instance of a cloud service provider 5.

The PC 1 may be configured to receive, from a user at least his/her login credentials for at least one of his/her end-user account(s), verify them and let said user to run applications and/or initiate different processes such as sending a code as a whole or part (i.e., "trusted portion") of an application, i.e., the payload 2, to be executed in the HW TEE.

Therefore, the PC 1 (or the server) includes one or several (micro)processors (and/or a (micro)controller(s)) 1.1, as data processing means, comprising and/or being connected to one or several memories 1.2, as data storing means, comprising or being connected to means for interfacing with the user, such as a Man Machine Interface (or MMI), and comprising or being connected to an Input/Output (or I/O) interface(s) 1.3 that are internally all connected, through an internal bidirectional data bus.

The I/O interface(s) 1.3 may include a wired and/or a wireless interface, to exchange, over a contact and/or Contactless (or CTL) link(s), with a user. Within the present description, the adjective "CTL" denotes notably that the communication means communicates via one or several Short Range (or SR) type Radio Frequency (or RF) links.

Alternatively, instead of a CTL link(s), or additionally, the PC 1 is connected, through a wire(s) or a cable(s) (not represented), to another end-user terminal or device (not represented) also operated at the owner's instances for instance, at the owner's facilities. That is, the owner may be also embodied as a server device configured to execute data / code, optionally split it into trusted and untrusted portions, and send the trusted portions to a CSP's HW TEE for its execution. Examples of payloads as highly sensitive data that must be protected and securely processed is personally identifiable information (PII), healthcare, financial, or intellectual property data.

The PC MMI may include a display screen(s), a keyboard(s), a loudspeaker(s) and/or a camera(s) (not represented). The PC MMI allows the user to interact with the PC 1. The PC MMI may be used for getting data entered and/or provided by the user.

The PC memory(ies) 1.2 may include one or several volatile memories and/or one or several non-volatile memories. The PC memory(ies) 1.2 may store data, such as an ID(s) relating to the PC, that allows identifying uniquely and addressing the PC. The PC ID(s) may include a unique ID, such as a UUID, a Uniform Resource Locator (or URL), a Uniform Resource ID (or URI), and/or other data that allows identifying uniquely and addressing the PC.

The PC memory(ies) 1.2 stores the Operating System (OS) and an application which is adapted to send the payload (also known as "workload") to the CSP to be processed within one of the HW TEE. The owner's application that allows sending this payload may be a web-based portal (e.g., Amazon Web Service, AWS, management console), or even an open source application (e.g., AWS command line interface).

The PC 1 itself, or in combination with a server, is further configured to send information over a communication network 6 (e.g., Transport Layer Security, TLS) to the CSP end. In particular, the owner 1 and the cloud service provider infrastructure 5 may communicate via one or more Application Program Interfaces, APIs, using HTTP over TLS.

At the CSP end 5, or CSP facilities, one or more computing devices 3, 3', 3", 3'" with one or more HW TEEs 4, 4' are provided as secure enclave(s) for confidential computing services.

As shown in figure 1, the computing device 3 includes a processor 3.1, a memory 3.2, and an I/O subsystem 3.3, and a data storage device 3.2.1. Examples of computing devices 3 suitable for confidential computing are those described in US 2021/0117246 A1 in relation with secure enclave supports such as Intel® Software Guard Extensions (SGX) technology.

Thus, the processor 3.1 may be embodied as a single or multi-core processor(s), digital signal processor, microcontroller, or other processor or processing/controlling circuit including the secure enclave support 3.1.1, which allows the processor 3.1 to establish a trusted execution environment 4 known as a secure enclave, in which executing code (i.e., payload) may be measured, verified, and/or otherwise determined to be authentic.

Additionally, code and data included in the secure enclave may be encrypted or otherwise protected from being accessed by code executing outside of the secure enclave. For example, code and data included in the secure enclave may be protected by hardware protection mechanisms of the processor 3.1 while being executed or while being stored in certain protected cache memory of the processor 3.1. The secure enclave support 3.1.1 may be embodied as a set of processor instruction extensions that allows the processor 3.1 to establish one or more secure enclaves in the memory 3.2.

The memory 3.2 may be embodied as any type of volatile or non-volatile memory or data storage capable of performing the functions described herein. In operation, the memory 3.2 may store various data and software used during operation of the computing device 3 such as operating systems, applications, programs, libraries, and drivers. As shown, the memory 3.2 may be communicatively coupled to the processor 3.1 via the I/O subsystem 3.3, which may be embodied as circuitry and/or components to facilitate input/output operations with the processor 3.1, the memory 3.2, and other components (not shown) of the computing device 3.

The data storage device 3.2.1 may be embodied as any type of device or devices configured for short-term or long-term storage (i.e., persistent storage) of data such as, for example, memory devices and circuits, memory cards, hard disk drives, solid-state drives, non-volatile flash memory, or other data storage devices. The secure enclave platform 3.1.1 may have native mechanisms for sealing or persistently storing pre-encrypted data and native standard key exchange to setup an encrypted tunnel for data transport between components of the computing device 3 (for instance, for local attestation purposes).

In this illustrative embodiment, the components of the computing device 3, or the secure enclave platform 3.1.1 itself, additionally comprise hardware attestation features to prove their authenticity. The root of trust in the computing device 3 manages the security credentials (keys, certificates) used with this purpose. As mentioned, the attestation process measures code and data of the running payload, for instance when it is starting up, and attests it when the owner requests attestation.

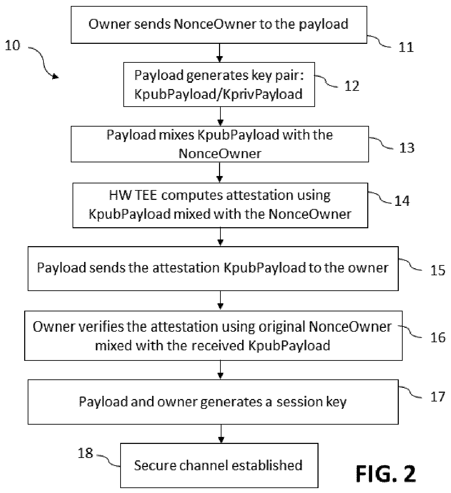

**Figure 2** depicts a schematic flowchart of a method 10 to establish a secure channel between the owner 1 of a software payload 2 and the software payload 2 itself. For this, it will be assumed that the owner 1 already sent the payload 2 to the CSP 5 and it is running into a HW TEE 4 described in figure 1.

Method 10 comprises the following steps: first, the owner 1 generates and sends 11 at least a nonce (NonceOwner) to the software payload 2. Then, the payload 2 generates 12 a payload key pair: public key (KpubPayload) and private key (KprivPayload). The payload mixes 13 the KpubPayload with NonceOwner as a "modified" nonce (AttestationNonce) to be provided to the HW TEE. That is, payload 2 will provide the HW TEE 4 with the AttestationNonce for computing the attestation instead of the original NonceOwner generated by the owner.

After, HW TEE 4 computes 14 an attestation (Attestation Payload Report) using at least this AttestationNonce. AttestationPayloadReport will be retrieved by the payload 2 and forwarded 15 to the owner with the KpubPayload.

Once received by the owner 1, it reproduces the same mixing done by the payload but instead using the nonce it originally sent (i.e., NonceOwner). Therefore, if the mixing output is the same, it is certain that no attack occurred. Therefore, the owner 1 can verify 16 that it is the same data it originally sent. Finally, the payload 2 and the owner 1 generates 17 a session key and thus establish 18 a secure channel between them.

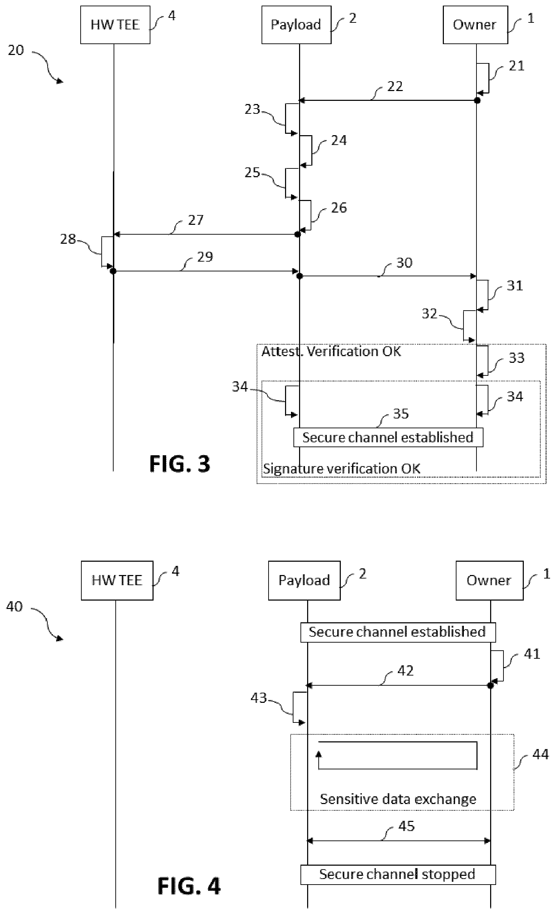

**Figure 3** depicts schematic diagram of an embodiment of the method 20 to establish a secure channel between the owner 1 and the software payload 2.

Alike traditional schemes, first, the payload 2 will be started by the owner and measured by the HW TEE. Before the payload starts, the HW TEE generates encryption key to protect its execution and, in addition, it measures its code and data when loading it in memory (e.g., measuring occurs by hashing its code and data). Just after, the payload 2 will normally send a liveness notification to the owner 1.

Preferably, from that point, the establishment of the secure channel according to this invention starts. In particular, in the following, it will be described a non-authenticated key-agreement protocol of the type of Elliptic Curve Diffie-Hellman, ECDH, protocol used for generating the session key by the software payload 2 and the owner 1.

As it can be seen from figure 3, the owner 1 generates 21 owner public data (ECDHOwnerPubElt) and NonceOwner, and sends 22 them to the payload 2. The owner also stores this NonceOwner for verifying afterwards the attestation.

Then, the payload 2 generates 23 ECDSA key pair: KpubPayload / KprivPayload. The payload will also generate 24 payload public data (ECDHPayloadPubElt) and sign 25 this ECDHPayloadPubEltusing KpubPayload resulting in ECDHPayloadPubEltSigned.

Next, the payload will compute 26 a hash of the KpubPayload further scrambling this hash output with the NonceOwner. In other words, computing:

$$XOR(hash(KpubPayload), NonceOwner) = AttestationNonce$$

This AttestationNonce will be sent 27 by the payload to the HW TEE for computing 28 the attestation. In a traditional workflow, the payload would send to the HW TEE the original NonceOwner sent by the user but, according to the invention, the AttestationNonce will be used instead. The skilled person would understand that the payload will also send specific parameters required by the specific HW TEE on a normal attestation workflow. Then, once received, the HW TEE 4 computes the attestation using at least this AttestationNonce thus giving rise to AttestationPayloadReport which is further sent back 29 to the payload 2.

Then, the payload receives it (or intercepts it), and forward it 30 to the owner together with KpubPayload, ECDHPayloadPubElt, ECDHPayloadPubEltSigned.

The owner will receive it and reproduce 31 the mixing done by the payload but using the original NonceOwner it sent to the payload. Therefore, the owner computes:

$$XOR(hash(KpubPayload), NonceOwner) = AttestationNonce'$$

and verifies 32 AttestationPayloadReport using AttestationNonce'. If the verification succeeds, the workflow continues. Otherwise, the attestation verification fails and the secure channel cannot be established. In addition, owner can be alerted somehow and, optionally, preventive measures may be taken such as aborting the connection with the payload.

In case the attestation can be verified, the owner 1 verifies 33 ECDHPayloadPubEltSigned using KpubPayload. If the verification of the signature succeeds, the workflow continues. Otherwise, the signature verification fails and the secure channel cannot be established.

Therefore, both the software payload 2 and the owner 1 separately generate 34 a shared secret using owner public data and payload public data, respectively. Hence, a direct secure channel is established 35 between them.

KPrivPayload is not limited to sign the ECDH Public Elements, it may be also used to sign any other data exchanged with the owner. In other embodiments, a Key Derivation Function may be used from the shared secret to have a specific signature key.

Advantageously, once the secure channel has been established, the owner is able to provision the very same attested payload with some secret(s).

Still, through the lifetime of the Payload, it may be necessary for the owner to have subsequent communications with it, for instance to perform secret(s) rotation.

Therefore, **figure 4** depicts a schematic diagram of an embodiment of the method 40 for providing authentication means for the owner. Thanks to this, both parties are authenticated and therefore the secure channel may be re-opened on demand with the very same attested payload.

That is, once the secure channel has been established between the owner 1 and the software payload 2 running into the HW TEE 4 for instance, using the method 10, 20 according to figures 2 or 3, the owner 1 generates 41 an owner ECDSA key pair: public key (KpubOwner) and private key (KprivOwner), and then sends the KpubOwner to the payload.

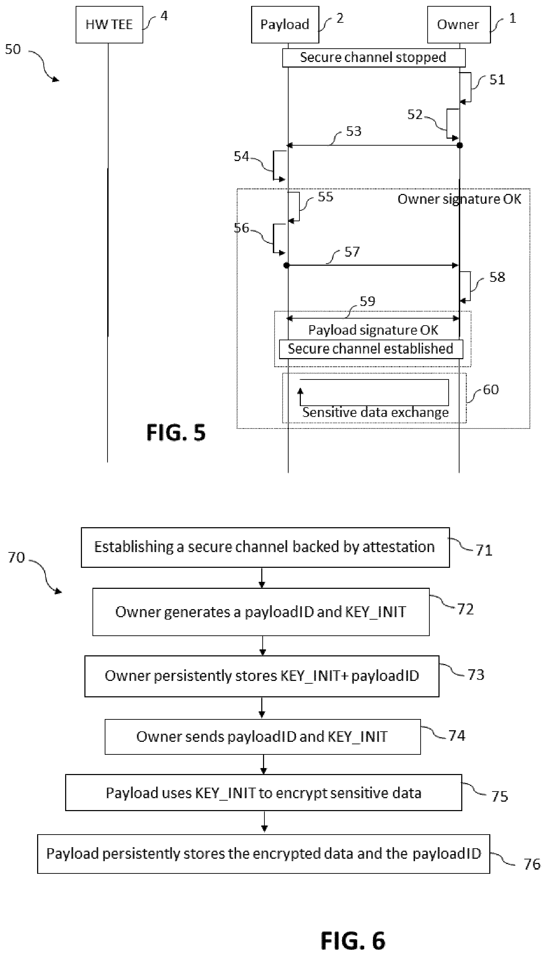

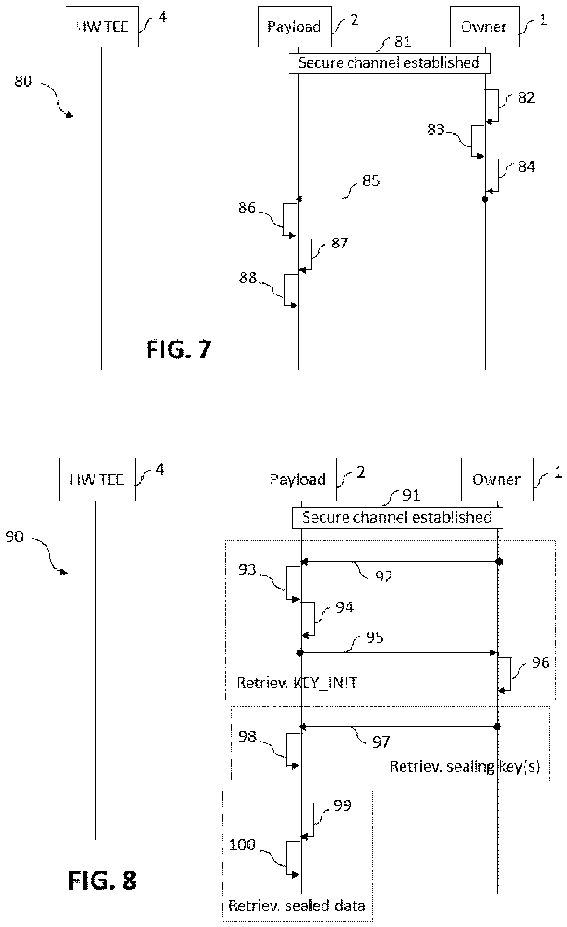

The software payload receives KpubOwner and stores it 43. This persistent storage may be used either using the native sealing capabilities of the HW TEE or, alternatively, using any of the methods according to any of figures 6 or 7.

Then, both the owner 1 and the payload 2 can exchange 44 any information relevant to the application in a secure manner.

After this provisioning, since maintaining the secure channel through the whole lifetime of the payload would be too costly in term of network resources, any of the ends may require closing the secure channel 45 and the secure communication will stop.

Therefore, an authenticated secure channel backed up by attestation may be opened and closed as needed.

**Figure 5** depicts a schematic diagram of an embodiment of the method 50 to re-establish a secure and authenticated channel between the owner 1 and the software payload 2.

It will be assumed that a secure channel according to the method 10, 20 of the figures 2 or 3 was already established and, afterwards, stopped.

First, the owner 1 and the payload 2 perform a non-authenticated key-agreement protocol of the type of ECDH protocol for generating a session key. This session key may be different or similar to the session key already used for the establishment of the last secure channel.

Thus, the owner generates 51 owner public data (ECDHOwnerPubElt) and signs it 52 using KprivOwner thus resulting in ECDHOwnerPubEltSigned. Then, the owner sends 53 these ECDHOwnerPubElt and ECDHOwnerPubElt-Signed to the payload 2.

The software payload retrieves the previously stored (e.g., in a HW TEE memory or the RAM of the payload) KpubOwner and verifies 54 ECDHOwnerPubEltSigned using KpubOwner.

If the owner signature is verified at payload's end, the workflow will continue. Otherwise, this verification will fail and the secure channel cannot be established.

If verified, the payload also generates 55 payload public data (ECDHPayloadPubElt) and retrieves KprivPayload for signing 56 this ECDHPayloadPubElt giving rise to ECDHPayloadPubEltSigned.

Then, the payload sends 57 ECDHPayloadPubElt and ECDHPayloadPubEltSigned to the owner which verifies 58, at its end, the ECDHPayloadPubEltSigned using the KpubPayload.

If verified, both the payload 2 and the owner 1 will generate or compute 59 a (new) shared secret using ECDHOwnerPubElt and ECDHPayloadPubElt, respectively.

Finally, a secure channel is re-established 60 between the owner and the software payload running into the HW TEE allowing the owner 1 and the payload 2 exchanging any sensitive information in a secure manner.

**Figure 6** depicts a schematic flowchart of a method to persistently store sensitive data by the payload 2.

It is assumed that a secure channel has been established 71 between the owner 1 and the payload 2 itself when running into a HW TEE at the instance of a cloud service provider. Preferably, this secure channel is backed by the computation, by the HW TEE, of an attestation.

First, the owner generates 72 a payload identifier (PayloadID) using information shared from the payload during the establishment of the secure channel. For instance, payloadID can be derived from the attestation information such as information relative to the HW TEE, the version of the payload, and/or the instantiation of the payload.

Then, the owner also generates 72 a key initiator (KEY_INIT) and persistently stores 73 (i.e., at the owner side) the key initiator associated to the payloadID. In a basic configuration, this KEY_INIT may be simply a symmetric key.

Then, the owner sends 74 these payloadID and key initiator to the payload. And the payload uses 75 the key initiator to encrypt data.

By doing so, the payload will be able to persistently store 76 the encrypted data and the payloadID in a memory under the protection of the HW TEE without relying on the native privacy mechanisms of the HW TEE.

The persistently stored sensitive data may be, for instance, KpubOwner and KprivPayload.

Therefore, when the payload need to retrieve this persistently stored data the following steps are taken:

- the payload retrieves the stored payloadID and sends it to the owner;
- the owner retrieves the key initiator associated to the received payload identifier and sends this key initiator to the payload; and
- the payload uses said key initiator to decrypt the persistently stored data.

After that, the payload will delete this key initiator.

**Figure 7** depicts a preferred embodiment of a method 80 to persistently store sensitive data by the payload 2 without relying on the sealing capabilities of the HW TEE.

As mentioned, a secure channel has been established 81 between the owner 1 and the payload 2, for instance, backed by the computation, by the HW TEE, of an attestation.

The owner generates 82 PayloadID using information from the attestation. Then, the owner encrypts the payloadID using a first encryption key (PayloadIDEncKey) resulting in PayloadIDCiphered.

Then, the owner also generates 83 KEY_INIT and persistently stores 84 (i.e., at the owner side) the KEY_INIT associated to the payloadID.

Then, the owner sends 85 these payloadIDCiphered and KEY_INIT to the payload.

The payload passes 86 the KEY_INIT through a key derivation function, KDF, to generate a symmetric key (DataEncKey) for encrypting data, and (in addition) to generate a DataIntKey and Message Authentication Code (MAC) that allows the payload to subsequently check the integrity of the persistently stored data.

Finally, first the payload stores 87 the PayloadIDCiphered and further encrypts and MAC 88 the sensitive data.

**Figure 8** depicts a preferred embodiment of a method 90 to retrieve persistently stored sensitive data by the payload 2 as, for instance, any of the methods 70, 80 according to figures 6 or 7.

As mentioned, a secure channel has been established 91 between the owner 1 and the payload 2, for instance, backed by the computation, by the HW TEE, of an attestation.

Either at the instance of the payload or as part of a workflow, the owner 1 sends 92 PayloadIDEncKey to the payload 2. Then, firstly, the payload retrieves 93 the PayloadIDCiphered and further decrypts it using PayloadIDEncKey (= PayloadID). The payload will then send back to the owner the PayloadID in clear.

As an alternative implementation (not shown), the payload 2 may retrieve PayloadIDCiphered and send it to the owner which will decrypt it using PayloadIDEncKey thus also resulting on PayloadID in clear.

Referring back to figure 8, once the owner has the PayloadID in clear, it looks for any known PayloadID and, if found, retrieves 96 the associated KEY_INIT. Otherwise, if no PayloadID can be found, an error message may appear and the communications may end.

If KEY_INIT retrieval succeeds, the owner sends 97 KEY_INIT to the payload which will pass it through KDF to generate 98 DataEncKey for decrypting the sealed data, and to generate 98 DataIntKey to check the integrity of the persistently stored data.

Therefore, the payload retrieves 99 the sealed data and, accordingly, use 100 DataEncKey and DataIntKey to decrypt and check the integrity of this sealed data.

The skilled person would recognize that these defined functionalities may be implemented as a library. Therefore, the developer can decide to use several payloads: one for the database, one for the webserver, one for the back-end, etc.

**Claims**

1. Computer-implemented method to establish a secure channel between the owner of a software payload and the software payload itself when running into a hardware-based trusted execution environment, HW TEE, at the instance of a cloud service provider, the method comprising the following steps:

   • sending, by the owner, at least a nonce to the software payload;
   • generating, by the software payload, a payload key pair: public key and private key;
   • mixing, by the software payload, the payload public key with the nonce;
   • computing, by the HW TEE, an attestation using at least this nonce mixed with the payload public key;
   • sending, by the software payload, at least the attestation, and the payload public key to the owner;
   • verifying, by the owner, the attestation using the sent nonce mixed with the received payload public key;
   • generating, by the software payload and the owner, a session key between them; and
   • establishing a secure channel between the owner and the software payload running into the HW TEE.

2. Method according to claim 1, further comprising the following steps for generating the session key by the software payload and the owner using a non-authenticated key-agreement protocol:

   • generating and sending, by the owner, owner public data to the software payload;
   • generating, by the software payload, payload public data and signing this payload public data using the generated payload private key;
   • sending, by the software payload, the payload public data and the signed payload public data to the owner;
   • verifying, by the owner, the signed payload public data using the received payload public key; and
   • computing, by the software payload and the owner, a shared secret using owner public data and payload public data, respectively.

3. Method according to claim 2, wherein the non-authenticated key-agreement protocol is based on a Elliptic Curve Diffie-Hellman, ECDH, protocol.

4. Method according to any of claims 2 or 3, wherein the shared secret is passed through a key derivation function, KDF, to generate the session key.

5. Method according to any of claims 1 to 4, wherein for mixing the payload public key with the nonce, the software payload firstly computes a hash of the payload public key and then scrambles the hash output with the nonce.

6. Method according to any of claims 1 to 5, wherein, once the secure channel has been established between the owner and the software payload running into the HW TEE, the owner sends an owner authentication means to the payload, this owner authentication means being configured to allow subsequent authentication of the owner to the payload to re-establish a secure channel.

7. Method according to claim 6, wherein said owner authentication means is a X.509 certificate, a X.509 certificate chain, an owner public key of a generated owner Elliptic Curve Digital Signature Algorithm, ECDSA, or Digital Signature Algorithm, DSA, key pair, and/or a symmetric key such as Advanced Encryption Standard, AES, key.

8. Method according to any of claims 6 or 7, wherein the owner generates an owner key pair: public key and private key using, for example, ECDSA, and then sends the owner public key to the software payload for subsequent authentication purposes.

9. Method according to any of claims 6 to 8, wherein, after receiving the authentication means, the software payload stores it in a memory under the protection of the HW TEE.

10. Computer-implemented method to re-establish an authenticated secure channel between the owner of a software payload and the software payload itself when running into a hardware-based trusted execution environment, HW TEE, at the instance of a cloud service provider, the method comprising the following steps:

    • establishing a secure channel according to the method of any of claims 1 to 9;
    • stopping the secure channel;
    • generating, by the owner, new owner public data;
    • signing, by the owner, this new owner public data and sending it to the software payload;
    • retrieving, by the software payload, owner authentication means configured to allow subsequent authentication of the owner to the payload to re-establish a secure channel;
    • verifying, by the software payload, the signed new owner public data by using the owner authentication means;
    • generating, by the software payload, new payload public data and signing this payload public data using the payload private key;
    • sending, by the software payload, the new payload public data and the signed new payload public data to the owner;
    • verifying, by the owner, the signed new payload public data using the payload public key;
    • computing, by the software payload and the owner, a new shared secret using new owner public data and new payload public data, respectively;
    • generating, by the software payload and the owner, a session key between them; and
    • re-establishing a secure channel between the owner and the software payload running into the HW TEE.

11. System for establishing a secure channel between the owner of a software payload and the software payload itself when running into a hardware-based trusted execution environment, HW TEE, at the instance of a cloud service provider, the system comprising:

    • the owner of the software payload configured to send the software payload to the HW TEE for its execution, the software payload configured to run into the HW TEE, and the HW TEE operated by a cloud service provider; wherein
    • the owner is further configured to send at least a nonce to the software payload;
    • a software payload is further configured to:

        ◦ receive at least the nonce sent from the owner;
        ◦ generate a payload key pair: public key and private key;
        ◦ mix the payload public key with the nonce; and
        ◦ send to the HW TEE said payload public key mixed with the nonce;

• the HW TEE is configured to compute an attestation using at least this received nonce mixed with the payload public key; and to send said attestation to the software payload;
• the software payload is further configured to send at least the attestation, and the payload public key to the owner;
• the owner is further configured to receive the attestation and the payload public key, mix the received payload public key with the sent nonce, and verify the received attestation using this mixed information; and
• the software payload and the owner being further configured to generate a session key between them thus establishing the secure channel between them.

12. Owner of a software payload for establishing a secure channel with the software payload itself when running into a HW TEE at the instance of a cloud service provider, the owner being configured to send the software payload to the HW TEE for its execution, wherein the owner is further configured to

• send at least a nonce to the software payload for mixing the nonce with a generated payload public key; and
• to receive, from the software payload, said payload public key and an attestation computed by the HW TEE using said mix of the nonce with the payload public key;
• mix the received payload public key with the sent nonce, and verify the received attestation from the software payload using this mixed information; and
• generate a session key thus establishing the secure channel with the software payload.

13. Software payload for establishing a secure channel with its owner when running into a HW TEE at the instance of a cloud service provider, the software payload being configured to run into the HW TEE operated by the cloud service provider;
wherein the software payload is further configured to:

• receive at least a nonce from the owner;
• generate a payload key pair: public key and private key;
• mix the payload public key with the nonce; and
• send to the HW TEE said;
• receive, from the HW TEE, a computed attestation using said mix of the nonce with the payload public key;
• send at least said attestation, and the payload public key to the owner; and
• generate a session key thus establishing the secure channel with the owner if the attestation if verified by the owner.

14. Hardware-based trusted execution environment, HW TEE, at the instance of a cloud service provider for establishing a secure channel between an owner of a software payload and the software payload itself when running into a the HW TEE, wherein the HW TEE is operated by the cloud service provider;
wherein the HW TEE is configured to:

• received a payload public key generated by the payload mixed with a nonce originally sent by the owner;
• compute an attestation using at least this received nonce mixed with the payload public key; and
• send said attestation to the software payload for its further verification by the owner.

FIG. 1

```
                    ┌──────────────────────────────────┐
                    │ Owner sends NonceOwner to the payload │
                    └──────────────────────────────────┘── 11
10 ─↘                            │
      ↘           ┌──────────────────────────┐
                  │ Payload generates key pair:     │── 12
                  │ KpubPayload/KprivPayload      │
                  └──────────────────────────┘
                               │
              ┌──────────────────────────────┐
              │ Payload mixes KpubPayload with the │── 13
              │          NonceOwner              │
              └──────────────────────────────┘
                               │
              ┌──────────────────────────────┐
              │ HW TEE computes attestation using │── 14
              │ KpubPayload mixed with the NonceOwner │
              └──────────────────────────────┘
                               │
        ┌────────────────────────────────────────┐
        │ Payload sends the attestation KpubPayload to the owner │── 15
        └────────────────────────────────────────┘
                               │
        ┌────────────────────────────────────────┐
        │ Owner verifies the attestation using original NonceOwner │── 16
        │       mixed with the received KpubPayload       │
        └────────────────────────────────────────┘
                               │
        ┌────────────────────────────────────────┐
        │   Payload and owner generates a session key   │── 17
        └────────────────────────────────────────┘
                               │
18 ─┐      ┌──────────────────────────┐
      └─────│  Secure channel established  │        FIG. 2
             └──────────────────────────┘
```

FIG. 3

FIG. 4

**FIG. 5**

Establishing a secure channel backed by attestation — 71

Owner generates a payloadID and KEY_INIT — 72

Owner persistently stores KEY_INIT+ payloadID — 73

Owner sends payloadID and KEY_INIT — 74

Payload uses KEY_INIT to encrypt sensitive data — 75

Payload persistently stores the encrypted data and the payloadID — 76

**FIG. 6**

FIG. 7

FIG. 8

Europäisches
Patentamt
European
Patent Office
Office européen
des brevets

# EUROPEAN SEARCH REPORT

Application Number

EP 21 30 6533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/362083 A1 (ORTIZ EDISON U [US] ET AL) 28 November 2019 (2019-11-28) * abstract * * paragraphs [0003] – [0289] * * figures 1-24 * ----- | 1-14 | INV. H04L9/32 H04L9/08 |
| X | WO 2018/112482 A1 (ALIBABA GROUP HOLDING LTD [US]) 21 June 2018 (2018-06-21) * abstract * * paragraphs [0001] – [0086] * * figures 1-8 * ----- | 1-14 | |

**TECHNICAL FIELDS SEARCHED (IPC)**

H04L
G06F

The present search report has been drawn up for all claims

| Place of search | Date of completion of the search | Examiner |
|---|---|---|
| Munich | 4 April 2022 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6533

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2022

| Patent document cited in search report | | Publication date | Patent family member(s) | | Publication date |
|---|---|---|---|---|---|
| US 2019362083 | A1 | 28-11-2019 | AU 2019277292 | A1 | 22-10-2020 |
| | | | CA 3060835 | A1 | 28-11-2019 |
| | | | CN 112567366 | A | 26-03-2021 |
| | | | EP 3803654 | A1 | 14-04-2021 |
| | | | JP 2021533435 | A | 02-12-2021 |
| | | | KR 20210041540 | A | 15-04-2021 |
| | | | SG 11202010188P | A | 27-11-2020 |
| | | | US 2019362083 | A1 | 28-11-2019 |
| | | | US 2021182409 | A1 | 17-06-2021 |
| | | | WO 2019227208 | A1 | 05-12-2019 |
| WO 2018112482 | A1 | 21-06-2018 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210117246 A1